# FASCICULE DE BREVET EUROPEEN

(11) **EP 2 521 670 B1**
(45) Date de publication et mention de la délivrance du brevet: **19.03.2014**
(21) Numéro de dépôt: 09760232.0
(22) Date de dépôt: 28.10.2009
(51) Int. Cl.: B64C 31/036, B64C 39/02

(54) **PROCEDE DE DECOLLAGE AUTOMATIQUE D'UN AERONEF A VOILURE SOUPLE, VOILE, ET AERONEF**
AUTOMATISCHES STARTVERFAHREN FÜR EIN FLUGZEUG MIT FLEXIBLER TRAGFLÄCHE SOWIE TRAGFLÄCHE UND FLUGZEUG
AUTONOMOUS TAKE-OFF METHOD OF A PARAFOIL AIRCRAFT, AIR EXPANDABLE WING AND AIRCRAFT

(30) Priorité: 30.10.2008 FR 0857404
(43) Date de publication de la demande: 14.11.2012
(73) Titulaire: Swissavia, 1201 Genève (CH)
(72) Inventeur: BERTHIER, Bernard, F-60460 Precy Sur Oise (FR)
(74) Mandataire: Rhein, Alain
(86) Numéro de dépôt international: PCT/FR2009/052081
(87) Numéro de publication internationale: WO 2010/049647

(56) Documents cités:
- WO-A-02/070343
- WO-A-2004/060744
- US-A1- 2002 190 157
- MESSINGER M: "Remote control" UNMANNED SYSTEMS, WASHINGTON, DC, vol. 12, no. 3, 1 janvier 1994 (1994-01-01), pages 31-32, XP000912240 ISSN: 0892-4023

## Description

L'invention concerne un procédé de gestion de décollage automatique d'un drone ou aéronef à voilure souple comportant au moins une voile, lequel comporte au moins un chariot ou harnais suspendu par des suspentes à au moins ladite voile

L'invention concerne encore une voile pour la mise en oeuvre de ce procédé.

L'invention concerne encore un drone ou aéronef à voilure souple, lequel comporte au moins un chariot ou harnais suspendu par des suspentes à au moins une telle voile, ledit chariot ou harnais comportant un autopilote conçu apte à donner des ordres à des actionneurs que comporte ledit drone ou aéronef pour agir sur lesdites suspentes, ou/et pour agir sur des moyens moteurs ou/et pour agir sur des gouvernes.

L'invention concerne le domaine des aéronefs à voilure souple, comportant un harnais ou un chariot, dit ci-après chariot, pour l'emport de charges ou/et de personnes, lequel chariot est suspendu sous une voilure souple sustentatrice, analogue à une aile de parapente, ci-après dénommée voile, et comportant de préférence des moyens moteurs. Une voilure souple procure alors une grande sécurité en cas de défaillance des moyens moteurs.

Un tel aéronef est connu par le document WO93/01087.

Un drone ou aéronef à voilure souple, surtout motorisé, est apte à remplir des missions de différentes natures, comme transport de personnes, de matériel, secours en mer, observation et surveillance du sol, des incendies, des frontières, du trafic, photographie aérienne, recueil d'échantillons, mesures de grandeurs physiques, météorologie, intervention en zones polluées ou contaminées, travail aérien, parachutage, largage, applications militaires, ou similaires. Un tel aéronef, utilisable avec ou sans pilote, est très avantageux, d'une grande autonomie, d'un très faible coût par kilo transporté, et d'une forte capacité d'emport.

Une utilisation sans pilote permet d'augmenter la charge utile. L'aéronef présente alors des avantages très particuliers, et est en particulier apte au transport de matières dangereuses, notamment des carburants, pour le ravitaillement de postes de secours avancés ou similaires. De la même façon, il peut être utilisé en zone polluée ou irradiée, par exemple pour le recueil d'échantillons, la prise de photographies, des mesures de grandeurs physiques, ou similaire.

L'ergonomie de pilotage reste toutefois une préoccupation majeure pour les aéronefs à voilure souple, dans la mesure où certaines phases de vol nécessitent un certain doigté de la part du pilote, ou du télé-pilote si l'aéronef est radio-commandé par exemple. En effet, au moins un télé-pilote est habituellement indispensable pour le décollage de l'appareil, qui est une manoeuvre délicate nécessitant beaucoup de précision et d'expérience. Sa présence est souhaitable, pour le décollage, sur le terrain duquel décolle l'aéronef.

Le décollage, et a fortiori le décollage automatique d'un aéronef sans pilote, ou drone, à voilure souple, est particulièrement délicat. En effet la voile est conçue apte à être gonflée par le vent relatif qui crée la portance nécessaire à l'emport d'une charge, constituée par le chariot, suspendu sous cette voile grâce à des suspentes. Ce chariot est mobile au sol par roulement ou glissement ou similaire, est conçu apte à emporter une charge utile, et dispose de moyens de traction ou de propulsion, notamment d'un moteur, permettant de créer l'énergie nécessaire au maintien du vol ou/et au décollage. Le gonflage de la voile peut être réalisé par des moyens annexes tels qu'un ventilateur, ou encore une pente. Toutefois, la véritable autonomie d'un tel drone ou aéronef impose qu'il comporte des moyens de motorisation.

Usuellement, pour faire décoller un drone ou aéronef à voilure souple, la voile est disposée au sol derrière le chariot, le moteur est mis en route, et accéléré. Le vent relatif ainsi créé gonfle la voile, qui se positionne au dessus du chariot. Après quelques mètres de roulage l'ensemble peut décoller. Dans une variante, le chariot est entraîné par des moyens de traction ou de propulsion, tels qu'un treuil ou similaire, ce qui permet de déployer la voile et de la hisser au-dessus du chariot.

En réalité, alors que le chariot accélère, une aile non contrôlée se comporte d'une façon anarchique, et est soumise à des balancements qui s'amplifient, des fermetures, des changements de direction, entre autres dysfonctionnements, qui risquent de provoquer le retournement du chariot, ou encore un mouvement de balancier pouvant conduire à la destruction de l'appareil. De même, en cas de fort vent latéral, le gonflement de la voile est perturbé, ce qui se traduit par le déport de la voile par rapport au chariot. Des phénomènes de roulis et de tangage rendent l'aéronef difficilement contrôlable et peuvent faire échouer le décollage. Si la manoeuvre de décollage est faite par télécommande, le retard associé ainsi qu'une mauvaise anticipation du télé-pilote peuvent amplifier le phénomène de balancement.

Dans les versions d'appareils les plus évoluées (voir par exemple les documents WO 02/070343 A2 et US 6,808,144 B1) , pour permettre un fonctionnement automatisé, le chariot est muni d'un ou plusieurs capteurs d'attitudes et de senseurs tels que magnétomètres, télémètres, capteurs de mesure dynamique et statique de la pression, « GPS », ou similaires. Ces capteurs et senseurs informent un pilote automatique dit autopilote, lequel est conçu apte à donner des ordres à des actionneurs qui dirigent les commandes de vol, notamment des commandes des moyens moteurs de propulsion ou de traction d'une part, et d'autre part des commandes agissant sur les suspentes, tels que vérins, enrouleurs, freins de voilure ou similaires. Dans la suite de la description, on appellera capteur d'attitude chariot un capteur d'attitude embarqué dans le chariot, qui comporte des capteurs tels qu'inclinomètres ou similaires, pour mesurer les angles ou/et vitesses de déplacement entre les axes du chariot et un référentiel sol absolu.

Les aéronefs à voilure souple connus ne peuvent utiliser le capteur d'attitude chariot du chariot pour intervenir sur les paramètres de décollage. En effet, la difficulté sur ce type d'aéronef est que, durant toute la phase de gonflage, de montée de la voile au-dessus du chariot, de positionnement de la voile à la verticale du chariot, et de roulage ou glissage, le chariot qui contient les capteurs d'attitude ne vole pas, alors que l'aile est, elle, déjà en vol. Les capteurs d'attitude du chariot ne peuvent donc décrire le fonctionnement de la voile.

L'invention se propose de résoudre ce problème en rendant possible un décollage automatique, en toute fiabilité, et sans nécessiter la compétente d'un pilote à bord ou sur le site de décollage. L'invention s'attache à développer un procédé de gestion de décollage synchrone, ou du moins avec une réaction très rapide, par rapport aux mouvements de la voile relativement à un référentiel sol.

L'invention se propose encore de faciliter l'emploi d'aéronefs à voilure souple, en autorisant des décollages complètement automatiques.

A cet effet, l'invention concerne un procédé de gestion de décollage automatique d'un drone ou aéronef à voilure souple comportant au moins une voile, lequel comporte au moins un chariot ou harnais suspendu par des suspentes à au moins ladite voile, ledit procédé étant caractérisé en ce que :
- on équipe ledit chariot ou harnais d'au moins un autopilote conçu apte à donner des ordres de mouvement à des actionneurs dont on équipe ledit drone ou aéronef pour agir au moins sur lesdites suspentes ;
- on équipe ladite voile d'au moins un capteur d'attitude voilure, comportant au moins un accéléromètre sur au moins deux axes et au moins un gyromètre sur au moins deux axes, conçu apte à définir la position d'un référentiel dit voile par rapport à un référentiel sol, ainsi que de moyens de communication avec ledit autopilote;
- au moins lors du décollage dudit drone ou aéronef, on récupère des informations en provenance dudit capteur d'attitude voilure pour les communiquer audit autopilote pour donner des ordres auxdits actionneurs.

L'invention concerne encore une voile pour la mise en oeuvre de ce procédé, caractérisée en ce qu'elle comporte au moins un capteur d'attitude voilure comportant lui-même une centrale inertielle embarquée équipée d'au moins un accéléromètre sur au moins deux axes et d'au moins un gyromètre sur au moins deux axes, et en ce qu'elle comporte encore des moyens de communication avec un autopilote.

L'invention concerne encore un drone ou aéronef à voilure souple, lequel comporte au moins un chariot ou harnais suspendu par des suspentes à au moins une voile selon la revendication précédente, ledit chariot ou harnais comportant ledit autopilote conçu apte donner des ordres à des actionneurs que comporte ledit drone ou aéronef pour agir sur lesdites suspentes, ou/et pour agir sur des moyens moteurs ou/et pour agir sur des gouvernes, caractérisé en ce lesdits moyens de communication sont conçus aptes à transmettre des informations en provenance dudit capteur d'attitude voilure pour les communiquer audit autopilote pour donner des ordres auxdits actionneurs.

L'invention comporte un logiciel de gestion des paramètres de décollage pour assurer un décollage sûr et stable, grâce à l'utilisation d'une centrale inertielle. Ce contrôle des paramètres fournit une précieuse assistance au pilote. Il permet aussi de se passer de pilote.

D'autres avantages de l'invention apparaîtront à la lecture de la description qui va suivre, exposant un mode de réalisation non limitatif de l'invention.

L'invention concerne l'automatisation du décollage d'un drone ou aéronef à voilure souple, qui sera désigné ci-après comme aéronef. Celui-ci comporte au moins un chariot ou harnais, ci-après désigné comme chariot, suspendu par des suspentes à au moins une voile. Ce chariot comporte un autopilote conçu apte à donner des ordres à différents actionneurs.

L'autopilote est un calculateur équipé d'un logiciel qui est conçu apte à traiter des signaux de capteurs, en particulier d'accéléromètres, magnétomètres, et de gyroscopes en provenance d'au moins une centrale inertielle, des signaux de positionnement issus d'un « GPS », ainsi que des signaux émanant d'autres capteurs tels qu'altimètre, variomètre, jauge de carburant, tachymètre, ou autres instruments de bord aéronautiques classiques, notamment des données moteurs, ou encore des signaux émanant d'élément de vision, ou radar, ou similaire. Le logiciel est donc mis en oeuvre pour traiter des grandeurs physiques qui sont des signaux et des mesures, les comparer à des consignes, et générer des signaux pour la commande d'actionneurs tels que servo-commandes, vérins, et autres. Ces actionneurs sont conçus aptes à agir sur les suspentes, ainsi que sur les moyens moteurs si l'aéronef en comporte, et sur d'autres moyens tels que moyens de direction, de freinage de voilure, de commande de vol, gouvernes, ou similaires.

Le procédé de gestion de décollage selon l'invention met en oeuvre un tel autopilote, dont l'objet est de gérer ces actionneurs, pour agir de façon adaptée sur les commandes de vol au moins dans la phase de décollage, voire sur d'autres phases de vol.

Selon l'invention, le procédé de gestion de décollage automatique d'un drone ou aéronef à voilure souple comportant au moins une voile, lequel comporte au moins un chariot ou harnais suspendu par des suspentes à au moins cette voile, consiste à réaliser les opérations suivantes :
- on équipe ledit chariot ou harnais d'au moins un autopilote conçu apte à donner des ordres de mouvement à des actionneurs dont on équipe ledit drone ou aéronef pour agir au moins sur lesdites suspentes ;
- on équipe ladite voile d'au moins un capteur d'attitude voilure, comportant au moins un accéléromètre sur au moins deux axes et au moins un gyromètre sur au moins deux axes, conçu apte à définir la position d'un référentiel dit voile par rapport à un référentiel sol, ainsi que de moyens de communication avec ledit autopilote;
- au moins lors du décollage dudit drone ou aéronef, on récupère des informations en provenance dudit capteur d'attitude voilure pour les communiquer audit autopilote pour donner des ordres auxdits actionneurs.

Selon l'invention, la voile conçue pour la mise en oeuvre de ce procédé comporte au moins un capteur d'attitude voilure comportant lui-même une centrale inertielle embarquée équipée d'au moins un accéléromètre sur au moins deux axes et d'au moins un gyromètre sur au moins deux axes, et en ce qu'elle comporte encore des moyens de communication avec un autopilote.

Le système d'axes comporte un premier axe, de préférence selon la direction de la pesanteur, et deux autres axes de préférence horizontaux, non confondus entre eux. De façon préférée pour la simplification des calculs, mais nullement obligatoire, les trois axes du système d'axes sont choisis orthogonaux entre eux. On comprend que, de façon préférée mais nullement obligatoire, les deux axes selon lesquels on recueille les signaux de l'accéléromètre et ceux du gyromètre sont les mêmes. La centrale inertielle est équipée alors d'au moins un accéléromètre sur au moins deux axes et d'au moins un gyromètre sur au moins lesdits mêmes deux axes.

Dans un mode de réalisation particulier, on équipe la voile d'au moins un capteur d'attitude voilure comportant au moins un accéléromètre sur trois axes et au moins un gyromètre sur trois axes, conçu apte à définir la position d'un référentiel voile par rapport à un référentiel sol, ainsi que de moyens de communication avec l'autopilote.

Le capteur d'attitude voilure est de préférence installé au coeur même de la voile, est donc conçu à la fois léger et résistant, et est doté de au moins un accéléromètre selon au moins deux axes, et de au moins un gyromètre selon au moins deux axes, préférentiellement les mêmes que ceux de l'accéléromètre. Le capteur d'attitude voilure envoie, par des moyens de communication tels qu'un émetteur « Blue Tooth », ou par une autre fréquence radio, ou par fil, des informations en données brutes sur l'attitude de la voile pendant les phases de gonflage de cette dernière, de positionnement de la voile au dessus du chariot, et de roulage jusqu'au décollage. Naturellement, il peut envoyer des informations de même type pendant toute phase de vol, si cela est souhaité.

Pour permettre la mise en oeuvre du procédé selon l'invention, les moyens de communication sont conçus aptes à transmettre des informations en provenance du capteur d'attitude voilure pour les communiquer à l'autopilote pour donner des ordres aux actionneurs.

Selon l'invention, on transmet, depuis le capteur d'attitude voilure, des mesures inertielles brutes à l'autopilote qui les traite en estimant de façon optimale l'attitude et les vitesses angulaires de la voile, par intégration des vitesses angulaires fournies par le ou les gyromètres et détermination de la direction de la gravité selon les mesures du ou des accéléromètres.

Ces données brutes sont filtrées afin de modéliser les erreurs et les incertitudes des capteurs. Les valeurs après filtrage sont envoyées à l'autopilote qui les interprète et donne les ordres adéquats aux actionneurs, qui agissent sur les commandes de vol.

L'autopilote est aussi conçu apte à commander des actionneurs que comporte ledit drone ou aéronef pour agir sur des moyens moteurs internes quand l'aéronef en comporte, ou/et pour agir sur des gouvernes quand l'aéronef en comporte.

Selon le cas, l'aéronef comporte des moyens moteurs internes conçus aptes à permettre son décollage, ou/et des moyens de liaison à des moyens moteurs externes conçus aptes à permettre son décollage tels qu'un treuil ou similaire. Les actionneurs sont alors conçus aptes à commander les moyens moteurs, selon le cas internes ou/et externes.

Dans un mode de réalisation particulier, l'aéronef comporte encore des moyens de direction, ou/et de freinage de voilure, ou/et de commande de vol, ou/et des gouvernes, que les actionneurs sont conçus aptes à commander. L'autopilote est alors conçu apte à commander des moyens de direction, ou/et de freinage de voilure, ou/et de commande de vol, ou/et des gouvernes, quand l'aéronef en comporte.

La gestion des moyens de traction ou de propulsion, notamment des gaz d'un moteur thermique, ou encore du régime d'un moteur électrique, ou similaire, est alors elle aussi automatique. De ce fait, il suffit au pilote, à l'opérateur, ou au télé-pilote, d'actionner un déclencheur tel que bouton de commande ou analogue, constituant les moyens de transmission, pour mettre l'aéronef en l'air.

Le capteur d'attitude voilure comporte au moins une centrale inertielle « IMU », ou Inertial Measurement Unit, basée de préférence sur la technologie « MEMS » utilisant des accéléromètres 3 axes et des gyromètres 3 axes. Cette centrale inertielle est associée à un module de communication. La communication peut aussi bien être réalisée sans fil qu'en filaire. La centrale inertielle transmet ainsi des mesures inertielles brutes à l'autopilote, qui, à partir de celles-ci, estime de façon optimale l'attitude de la voile et ses vitesses angulaires.

La technologie « MEMS » est préférée, car elle permet la miniaturisation, tant en taille qu'en poids, du capteur d'attitude voilure, ce qui est souhaitable afin de ne pas modifier le profil de la voile et perturber celle-ci en vol.

L'autopilote met en oeuvre un logiciel dédié, qui estime l'attitude de la voile par intégration des vitesses angulaires fournies par le ou les gyromètres sur au moins deux axes, ou encore sur les 3 axes du système d'axes choisi . Le ou les accéléromètres permettent la détermination de la direction de la gravité, fournissant ainsi une référence stable. Le logiciel procède au filtrage de ces données, afin de déterminer une estimation optimale de l'attitude et des vitesses de rotation. Il réalise également une calibration des mesures inertielles, en estimant les biais et facteurs d'échelles pour chacun des senseurs.

A cet effet, l'autopilote est piloté par un programme d'intégration par éléments finis pour calculer les valeurs des ordres donnés aux actionneurs, ledit programme étant basé sur la théorie des angles d'Euler, ou la théorie des quaternions, ou la théorie des cosinus directeurs.

A partir de ces mesures, l'autopilote détermine les commandes adéquates qu'il convient d'envoyer aux actionneurs, notamment aux vérins des freins de voilure de la voile, afin de recaler la voile dans une position angulaire qui puisse permettre un décollage. Le calcul des commandes des vérins tient avantageusement compte de la vitesse de déplacement du chariot. En effet, plus la vitesse du chariot est élevée, plus il convient de piloter la voile finement.

Afin de s'affranchir des singularités mathématiques inévitables liées à la définition de l'attitude en dimension trois, le filtre développé s'appuie préférentiellement sur le groupe des quaternions. Cet outil mathématique est choisi car il permet d'avoir une meilleure stabilité dans les calculs numériques.

L'intégration d'une centrale inertielle dans la voile permet de déterminer avec précision sa position, et sa vitesse angulaire en tangage et en roulis.

L'autopilote peut alors commander aussi bien les manoeuvres à effectuer sur les élévateurs et la voile, que les manoeuvres à effectuer sur les moyens de motorisation, ainsi que sur des moyens de conduite du chariot, tel que moyens de direction. L'autopilote peut aussi afficher les manoeuvres ou corrections à effectuer pour un pilote présent à bord. Mais, de préférence, il convient d'éviter tout contrôle humain, générateur de perturbation. La mise en oeuvre de l'invention permet d'effectuer en permanence le recentrage de la voile relativement au sol, et autorise ainsi un décollage optimal.

Les principes de commande sont les suivants :
- si la voile est décentrée, un ordre de freinage de voilure est envoyé au frein de voilure situé du côté opposé ;
- si la voile tend à s'écarter de sa position idéale, un ordre adéquat de correction est envoyé aux commandes. Ceci vaut aussi bien pour les phases de vol que pour la phase de décollage ;
- en cas de tangage, une action combinée sur les freins de voilure permet de maîtriser la position ;
- si la voile et le chariot ne sont pas centrés l'un sous l'autre, un ordre de rotation est adressé à la roue directrice.

L'autopilote est en particulier apte, le cas échéant, à agir sur des gouvernes que peut comporter l'aéronef, par exemple au niveau d'empennages rapportés sur le chariot, ou similaire.

On comprend que la combinaison de toutes ces actions tend à reproduire les actions que ferait un pilote humain.

Dans une variante particulière, le chariot comporte au moins un capteur d'attitude chariot conçu apte à définir la position d'un référentiel chariot par rapport à un référentiel sol, et comportant encore un autopilote conçu apte à donner des ordres à des actionneurs que comporte cet aéronef pour agir sur ces suspentes. Dans cette variante, l'autopilote est conçu apte à couper, sous l'effet d'une action sur des moyens de transmission, les informations données par le capteur d'attitude chariot, et à les remplaçer par celles données par un capteur d'attitude voilure inséré dans la voile elle-même, pour délivrer des ordres aux actionneurs.

A cet effet, l'aéronef comporte encore un moyen de commutation conçu apte à donner au capteur d'attitude voilure la priorité sur le capteur d'attitude chariot pour informer l'autopilote et générer les commandes envoyées par ce dernier aux actionneurs.

Le procédé de gestion de décollage automatique est alors complété par les étapes suivantes :
- on équipe ledit chariot ou harnais d'au moins un capteur d'attitude chariot conçu apte à définir la position d'un référentiel dit chariot par rapport à un référentiel sol ;
- au moins lors du décollage dudit drone ou aéronef, on utilise un moyen de commutation pour donner préséance au capteur d'attitude voilure sur le capteur d'attitude chariot pour communiquer avec l'autopilote pour donner des ordres aux actionneurs.

On comprend que, dans le cas où la voile est équipée de plusieurs capteurs d'attitude voilure, notamment par sécurité, ou/et où le chariot est équipé de plusieurs autopilotes, des règles de priorité sont définies pour donner priorité à un capteur d'attitude voilure sur les autres, ou/et à un autopilote sur les autres, l'aéronef étant alors équipé de moyens de gestion et de transmission pour appliquer la mise en oeuvre de ces priorités.

La mise en oeuvre de l'invention, sous ses différentes formes, permet de maintenir la voile et le chariot l'un sous l'autre, dans les phases au sol comme dans les phases en vol. L'autopilote est notamment en mesure de vérifier la position relative du centre d'inertie du chariot par rapport au centre de poussée de la voile.

Le procédé de décollage automatique selon l'invention permet encore, dans la mesure où il permet de s'affranchir de la présence d'un pilote, une utilisation dans les cas réputés comme dangereux, notamment les tests de voile de parapente ou de para-moteur. En effet, de gros avantages par rapport à un pilotage humain sont disponibles : répétabilité des actions sur les commandes, enregistrement possible des paramètres de vol et des actions associées et donc faculté d'analyse a posteriori, masse de l'aéronef facilement ajustable, suppression du risque d'accident corporel, essais en vol en terrain quelconque.

En somme, l'invention autorise un décollage entièrement automatique d'un aéronef à voilure souple équipé ad hoc, dans d'excellentes conditions de sécurité, et pour un coût modique.

## Revendications

1. Procédé de gestion de décollage automatique d'un drone ou aéronef à voilure souple comportant au moins une voile, lequel comporte au moins un chariot ou harnais suspendu par des suspentes à au moins ladite voile, ledit procédé étant **caractérisé en ce que** :
- on équipe ledit chariot ou harnais d'au moins un autopilote conçu apte à donner des ordres de mouvement à des actionneurs dont on équipe ledit drone ou aéronef pour agir au moins sur lesdites suspentes ;
- on équipe ladite voile d'au moins un capteur d'attitude voilure, comportant au moins un accéléromètre sur au moins deux axes et au moins un gyromètre sur au moins deux axes, conçu apte à définir la position d'un référentiel dit voile par rapport à un référentiel sol, ainsi que de moyens de communication avec ledit autopilote;
- au moins lors du décollage dudit drone ou aéronef, on récupère des informations en provenance dudit capteur d'attitude voilure pour les communiquer audit autopilote pour donner des ordres auxdits actionneurs.

2. Procédé selon la revendication 1, **caractérisé en ce que** on transmet, depuis ledit capteur d'attitude voilure, des mesures inertielles brutes audit autopilote qui les traite en estimant de façon optimale l'attitude et les vitesses angulaires de ladite voile, par intégration des vitesses angulaires fournies par ledit ou lesdits gyromètres et détermination de la direction de la gravité selon les mesures dudit ou desdits accéléromètres.

3. Procédé selon la revendication 1 ou 2, **caractérisé en ce que** ledit autopilote est piloté par un programme d'intégration par éléments finis pour calculer les valeurs des ordres donnés auxdits actionneurs, ledit programme étant basé sur la théorie des angles d'Euler, ou la théorie des quaternions, ou la théorie des cosinus directeurs.

4. Procédé selon l'une des revendications 1 à 3, **caractérisé en ce que** on commande, par ledit autopilote des actionneurs que comporte ledit drone ou aéronef pour agir sur des moyens moteurs internes quand ledit drone ou aéronef en comporte, ou/et pour agir sur des gouvernes quand ledit drone ou aéronef en comporte.

5. Procédé selon l'une des revendications 1 à 4, **caractérisé en ce que** on commande encore, par ledit autopilote, des moyens de direction, ou/et de freinage de voilure, ou/et de commande de vol, ou/et des gouvernes, quand ledit drone ou aéronef en comporte.

6. Procédé selon l'une des revendications précédentes, **caractérisé en ce que** :
- on équipe ledit chariot ou harnais d'au moins un capteur d'attitude chariot conçu apte à définir la position d'un référentiel dit chariot par rapport à un référentiel sol ;
- au moins lors du décollage dudit drone ou aéronef, on utilise un moyen de commutation pour donner préséance audit capteur d'attitude voilure sur ledit capteur d'attitude chariot pour communiquer avec ledit autopilote pour donner des ordres auxdits actionneurs.

7. Procédé selon l'une des revendications précédentes, **caractérisé en ce que** :
- on équipe ladite voile d'au moins un capteur d'attitude voilure comportant au moins un accéléromètre sur trois axes et au moins un gyromètre sur trois axes, conçu apte à définir la position d'un référentiel dit voile par rapport à un référentiel sol, ainsi que de moyens de communication avec ledit autopilote.

8. Voile pour la mise en oeuvre de ce procédé, **caractérisée en ce qu'**elle comporte au moins un capteur d'attitude voilure comportant lui-même une centrale inertielle embarquée équipée d'au moins un accéléromètre sur au moins deux axes et d'au moins un gyromètre sur au moins deux axes, et **en ce qu'**elle comporte encore des moyens de communication avec un autopilote.

9. Drone ou aéronef à voilure souple, lequel comporte au moins un chariot ou harnais suspendu par des suspentes à au moins une voile selon la revendication précédente, ledit chariot ou harnais comportant ledit autopilote conçu apte à donner des ordres à des actionneurs que comporte ledit drone ou aéronef pour agir sur lesdites suspentes, ou/et pour agir sur des moyens moteurs ou/et pour agir sur des gouvernes, caractérisé en ce lesdits moyens de communication sont conçus aptes à transmettre des informations en provenance dudit capteur d'attitude voilure pour les communiquer audit autopilote pour donner des ordres auxdits actionneurs.

10. Drone ou aéronef à voilure souple selon la revendication précédente, **caractérisé en ce qu'**il comporte encore des moyens moteurs internes conçus aptes à permettre son décollage, ou/et des moyens de liaison à des moyens moteurs externes conçus aptes à permettre son décollage tels qu'un treuil ou similaire, et que lesdits actionneurs sont conçus aptes à commander lesdits moyens moteurs, selon le cas internes ou/et externes.

11. Drone ou aéronef à voilure souple selon la revendication 9 ou 10, **caractérisé en ce qu'**il comporte encore des gouvernes, ou/et des moyens de direction, ou/et de freinage de voilure, ou/et de commande de vol, que lesdits actionneurs sont conçus aptes à commander.

12. Drone ou aéronef à voilure souple selon l'une des revendications 9 à 11, **caractérisé en ce que** ledit chariot ou harnais comporte un capteur d'attitude chariot conçu apte à définir la position d'un référentiel chariot par rapport à un référentiel sol, **caractérisé en ce que** ledit drone ou aéronef comporte encore un moyen de commutation conçu apte à donner audit capteur d'attitude voilure priorité sur ledit capteur d'attitude chariot pour informer ledit autopilote et générer les commandes envoyées par ce dernier auxdits actionneurs.

## Patentansprüche

1. Verfahren zur Verwaltung des automatischen Starts einer Drohne bzw. eines Flugzeugs mit flexibler Tragfläche, die/das zumindest einen Schlitten bzw. ein Geschirr umfasst, der/das mittels Leinen an mindestens der Tragfläche aufgehängt ist, wobei das Verfahren **dadurch gekennzeichnet ist, dass** :
- der/das besagte Schlitten bzw. Geschirr mit zumindest einem Autopiloten ausgestattet ist, der geeignet ist, Befehle zu geben an Stellglieder, mit denen die/das besagte Drohne bzw. Flugzeug ausgestattet ist, um mindestens auf die besagten Leinen zu wirken ;
- die besagte Tragfläche mit mindestens einem Tragflächenlagesensor versehen wird, der mindestens ein Beschleunigungsmesser auf mindestens zwei Achsen und mindestens ein Gyroskop auf mindestens zwei Achsen, der geeignet vorgesehen ist, um die Position eines sogenannten Tragfläche-Bezugspunktes relativ zu einem Boden-Bezugspunkt zu definieren, sowie Mittel zur Kommunikation mit dem besagten Autopiloten umfasst ;
- mindestens während des Starts der Drohne bzw. des Flugzeugs werden Informationen von dem Tragflächenlagesensor zurückgewonnen, um sie dem besagten Autopiloten mitzuteilen, um den besagten Stellgliedern Befehle zu geben.

2. Verfahren nach Anspruch 1, **dadurch gekennzeichnet, dass** von dem besagten Tragflächenlagesensor rohe Trägheitsmessungen an den besagten Autopiloten übertragen werden, der diese verarbeitet, indem die Lage und die Winkelgeschwindigkeiten der besagten Tragfläche optimal geschätzt werden, durch Integrieren der von dem bzw. den besagten Gyroskopen gelieferten Winkelgeschwindigkeiten und durch Bestimmen der Richtung der Schwerkraft nach den Messungen des oder der Beschleunigungsmesser.

3. Verfahren nach Anspruch 1 oder 2, **dadurch gekennzeichnet, dass** der besagte Autopilot mittels eines Finite-Elemente-Integrationsprogramms getrieben wird, um die Werte der an die Stellglieder gegebenen Befehle zu berechnen, wobei das besagte Programm auf der Theorie der Euler-Winkel oder der Theorie der Quaternionen oder auf der Theorie der Richtungs-Cosinus basiert ist.

4. Verfahren nach einem der Ansprüche 1 bis 3, **dadurch gekennzeichnet, dass** über den Autopiloten die Stellglieder, die die besagte Drohne bzw. das besagte Flugzeug umfasst, gesteuert werden, um auf interne Antriebsmittel zu wirken, wenn die besagte Drohne bzw. das besagte Flugzeug solche umfasst, und/oder um auf Steuerflächen zu wirken, wenn die besagte Drohne bzw. das besagte Flugzeug solche umfasst.

5. Verfahren nach einem der Ansprüche 1 bis 4, **dadurch gekennzeichnet, dass** über den Autopiloten auch Lenk- oder/und Tragfläche-Brems- oder/und Flugsteuerungsmittel oder/und Steuerflächen gesteuert werden, wenn die besagte Drohne bzw. das besagte Flugzeug solche umfasst.

6. Verfahren nach einem der vorhergehenden Ansprüche, **dadurch gekennzeichnet, dass** :
- der/das Schlitten bzw. Geschirr mit mindestens einen Schlittenlagesensor ausgestattet wird, der geeignet vorgesehen ist, um die Position des sogenannten Schlittenbezugspunktes relativ zu einem Bodenbezugspunkt zu definieren ;
- mindestens während des Starts der Drohne bzw. des Flugzeugs ein Schaltmittel verwendet wird, um dem besagten Tragflächenlagesensor Vorrang auf den Schlittenlagesensor zum Kommunizieren mit dem besagten Autopiloten zu geben, um den besagten Stellgliedern Befehle zu geben.

7. Verfahren nach einem der vorhergehenden Ansprüche, **dadurch gekennzeichnet, dass** :
- die besagte Tragfläche mit mindestens einen Tragflächenlagesensor ausgestattet wird, der mindestens einen Beschleunigungsmesser auf drei Achsen und mindestens einen Gyroskop auf drei Achsen, der geeignet vorgesehen ist, um die Position eines sogenannten Tragfläche-Bezugspunktes relativ zu einem Boden-Bezugspunkt zu definieren, sowie Mittel zum Kommunizieren mit dem besagten Autopiloten umfasst.

8. Tragfläche zum Durchführen dieses Verfahrens, **dadurch gekennzeichnet, dass** sie mindestens einen Tragflächenlagesensor umfasst, der seinerseits eine mitgenommenen Trägheitsmesseinheit umfasst, die mit mindestens einem Beschleunigungsmesser auf mindestens zwei Achsen und mit mindestens einem Gyrometer auf mindestens zwei Achsen ausgestattet ist, und dadurch, dass sie auch Mittel zum Kommunizieren mit einem Autopiloten umfasst.

9. Drohne bzw. Flugzeug mit flexibler Tragfläche, die/das zumindest einen Schlitten oder ein Geschirr umfasst, der/das mittels Leinen an mindestens einer Tragfläche nach dem vorhergehenden Anspruch aufgehängt ist, wobei der/das besagte Schlitten bzw. Geschirr den besagten Autopiloten umfasst, der geeignet vorgesehen ist, um Stellgliedern, welche die/das besagte Drohne bzw. Flugzeug umfasst, Befehle zu geben, um auf die besagten Leinen zu wirken, oder/und auf Antriebsmittel zu wirken oder/und um auf Steuerflächen zu wirken, **dadurch gekennzeichnet, dass** die besagten Kommunikationsmittel geeignet vorgesehen sind, um Informationen von dem Trageflächenlagesensor zu übertragen, um sie dem Autopiloten mitzuteilen, um den besagten Stellgliedern Befehle zu geben.

10. Drohne bzw. Flugzeug mit flexibler Tragfläche nach dem vorgehenden Anspruch, **dadurch gekennzeichnet, dass** sie/es ferner interne Antriebsmittel umfasst, die geeignet vorgesehen sind, um ihren/seinen Start zu ermöglichen, oder/und Mittel zur Verbindung mit externen Antriebsmitteln, die geeignet vorgesehen sind, um ihren/seinen Start zu ermöglichen, wie eine Winde oder dergleichen, und dadurch, dass die besagten Stellglieder geeignet vorgesehen sind, um die besagten, je nach dem Fall internen oder/und externen, Antriebsmittel zu steuern.

11. Drohne bzw. Flugzeug mit flexibler Tragfläche nach Anspruch 9 oder 10, **dadurch gekennzeichnet, dass** sie/es ferner Steuerflächen oder/und Lenk- oder/und Tragflächenbrems- oder/und Flugsteuerungsmittel umfasst, welche die besagten Stellglieder geeignet vorgesehen sind, zu steuern.

12. Drohne bzw. Flugzeug mit flexibler Tragfläche nach einem der Ansprüche 9 bis 11, **dadurch gekennzeichnet, dass** der/das Schlitten bzw. Geschirr einen Schlittenlagesensor umfasst, der geeignet vorgesehen ist, um die Position eines Schlitten-Bezugspunktes relativ zum Boden-Bezugspunkt zu definieren, **dadurch gekennzeichnet, dass** die/das Drohne bzw. Flugzeug ferner eine Schalteinrichtung umfasst, die geeignet vorgesehen ist, um dem besagten Tragflächenlagesensor Vorrang auf den besagten Schlittenlagesensor zu geben, um den besagten Autopiloten zu informieren und die von diesem letzteren an die Stellglieder gesandten Befehle zu erzeugen.

## Claims

1. A method for managing the autonomous take-off of a drone or a parafoil aircraft including at least one wing, which comprises at least one carriage or harness suspended by rigging lines from at least said wing, wherein said method includes:
- said carriage or harness is equipped with at least one autopilot designed capable of giving movement orders to actuators said drone or aircraft is provided with in order to act at least on said rigging lines ;
- said wing is provided with at least one wing-attitude sensor, including at least one accelerometer on at least two axes and at least one gyroscope on at least two axes, designed capable of defining the position of a so-called wing reference with respect to a ground reference, as well as means for communicating with said autopilot ;
- at least during the take-off of said drone or aircraft, information proceeding from said wing-attitude sensor is retrieved for communicating same to said autopilot in order to give orders to said actuators.

2. The method according to claim 1, wherein raw inertial measurements are transmitted from said wing-attitude sensor to said autopilot, which processes them estimating in an optimal way the attitude and the angular rates of said wing, by integrating the angular rates provided by said one or several gyroscopes and by determining the direction of gravity according to the measurements of said one or several accelerometers.

3. The method according to claim 1 or 2, wherein said autopilot is driven by a program for integrating by finite elements, in order to calculate the values of the orders given to said actuators, said program being based on the theory of Euler angles, or the quaternion theory, or the directional-cosine theory.

4. The method according to one of claims 1 to 3, wherein by said autopilot are controlled actuators said drone or aircraft includes, so as to act on internal motor means when said drone or aircraft includes some, or/and to act on rudders when said drone or aircraft includes some.

5. The method according to one of claims 1 to 4, wherein that by said autopilot are also controlled steering and/or wing-braking, and or flight control means, and/or rudders, when said drone or aircraft includes some.

6. The method according to one of the preceding claims, wherein:
- said carriage or harness is equipped with at least one carriage-attitude sensor designed capable of defining the position of s so-called carriage reference with respect to a ground reference ;
- at least during the take-off of said drone or aircraft a switching means is used for giving precedence to said wing-attitude sensor over said carriage-attitude sensor for communicating with said autopilot for giving orders to said actuators.

7. The method according to one of the preceding claims, wherein:
- said wing is equipped with at least one wing-attitude sensor comprising at least one accelerometer on three axis and at least one gyroscope on three axis, designed capable of defining the position of a so-called wing reference with respect to a ground reference, as well as means for communicating with said autopilot.

8. A wing for implementing this method, wherein it comprises at least one wing-attitude sensor comprising, in turn, a carried-on inertial board equipped with at least one accelerometer on at least two axes and at least one gyroscope on at least two axes, and wherein it also includes means for communicating with an autopilot.

9. A drone or parafoil aircraft, which includes at least one carriage or harness suspended rigging lines from at least said wing according to the preceding claim, said carriage or said harness including said autopilot designed capable of giving orders to the actuators said drone or aircraft includes, in order to act on said rigging lines, and/or in order to act on motor means and/or in order to act on rudders, wherein said communication means are designed capable of transmitting information from said wing-attitude sensor in order to communicate same to said autopilot for giving orders to said actuators.

10. The drone parafoil aircraft according to the preceding claim, wherein it further includes internal motor means designed capable of permitting its take-off and/or means for connecting to external motor means designed capable of allowing its take-off, such as a winch, and said actuators are designed capable of controlling said, as the case may be, internal and/or external motor means.

11. The drone or parafoil aircraft according to claim 9 or 10, wherein it also includes rudders, and/or steering or/and wing-braking and/or flight-control means, which said actuators are designed capable of controlling.

12. The drone or parafoil aircraft according to one of claims 9 to 11, wherein said carriage or harness includes a carriage-attitude sensor designed capable of defining the position of a carriage reference with respect to a ground reference, wherein said drone or aircraft further includes a switching means designed capable of give said wing-attitude sensor priority over said carriage-attitude sensor for informing said autopilot and for generating the orders sent by the latter to said actuators.
